# EUROPEAN PATENT SPECIFICATION

(11) **EP 4 147 983 B1**
(45) Date of publication and mention of the grant of the patent: **26.08.2026**
(21) Application number: 22195084.3
(22) Date of filing: 12.09.2022
(51) Int. Cl.: B64U 20/20, B64U 20/65, B64U 50/11, B64U 50/13, B64U 50/19, B64U 50/23

(54) **AN UNMANNED AERIAL VEHICLE (UAV)**
UNBEMANNTES LUFTFAHRZEUG (UAV)
VÉHICULE AÉRIEN SANS PILOTE (UAV)

(30) Priority: 14.09.2021 CN 202122216286 U
(43) Date of publication of application: 15.03.2023
(73) Proprietor: Shanghai Autoflight Co., Ltd., Jinshan District Shanghai 201500 (CN)
(72) Inventor: YU, Tian, Shanghai 201500 (CN)
(74) Representative: MERH-IP Matias Erny Reichl Hoffmann Patentanwälte PartG mbB

(56) References cited:
- RU-C1- 2 741 136
- US-A1- 2018 237 138

## Description

### Technical Field

The invention relates to the technical field of UAV, in particular to a UAV.

### Background Art

With the vigorous development of UAV industry, the types and application fields of UAV are becoming more extensive. For the large and medium-sized fixed wing or compound wing UAV whose main mission is cruise, mapping and logistics transportation, its endurance and mileage are of particular importance.

Most of the existing UAVs use the following two power output modes: first, the built-in engine unit relies on the engine to drive the generator to generate electricity, and then the battery stores the electricity and supplies it to the motor to drive the propeller; second, the engine directly acts as the power source of the UAV, and provides power through direct drive propeller. The first power output mode has high reliability. Even if the engine shut down, it will not affect the flight safety of the UAV. However, it takes up a lot of space, necessitating the consideration of the heat dissipation of the engine, and results in extremely low energy utilization rate due to multiple energy transformations. Although the second power output mode is featured by simple structure and high energy utilization, it has no power output redundancy. Once the engine stops, the power source will be lost, affecting flight safety. Moreover, the endurance mileage of the UAV is limited by the mounted battery, which is used to power other equipment of the UAV. When the battery power is insufficient, the UAV needs to return. Third, at present, the UAV produces too much vibration and noise during operation, and no corresponding methods have been taken to reduce vibration and noise. RU 2 741 136 C1 relates to a starter-generator coaxially attached to an engine, wherein shock absorbers are located on the engine frame, which is equipped with a flange with attachment points on a fuselage. US 2018/ 237 138 A1 relates to a UAV, which includes at least one rotor motor configured to drive at least one propeller to rotate.

Therefore, it is urgent to improve the prior art.

### Summary of the Invention

The invention aims to provide a UAV, which can ensure high energy utilization and realize power redundancy, significantly improve flight safety, ensure sufficient endurance and mileage, while reducing vibration and noise of the UAV during the operation.

To achieve the above purpose, the following technical scheme is provided:
The invention provides a UAV, which comprises:
A UAV body and a propeller arranged on the UAV body;
An engine, which comprises an engine body and an engine output shaft arranged on the engine body; and is arranged on the UAV body;
A motor, which comprises a stator, a rotor, and a stator connector for connecting the stator and the rotor; the stator connector is arranged on the engine body, and the rotor is coaxially arranged on the engine output shaft; the propeller is coaxially arranged on the rotor;
A battery, which is connected to the motor, and can be discharged to provide electric energy to the motor or receive the electric energy output by the motor for charging;
A damping device, which is connected to the engine, and also comprises guide channels. Each guide channel is arranged divergently from the center axial direction of the damping device itself, and the adjacent guide channels form a preset included angle with each other, which is used to disperse and weaken the vibration generated by the engine during operation. The engine, the motor, and the propeller are coaxially connected.

Further, the engine can be a two-stroke engine.

Further, the motor can be a permanent magnet synchronous motor.

Further, the guide channels of the damping device are divided into a first guide channel, a second guide channel, a third guide channel and a fourth guide channel.

Further, the guide channels of the adjacent damping device can form a preset included angle of 30 degrees to 150 degrees.

Further, the propeller can be a multi-blade thrust propeller.

Further, the UAV body can be composed of carbon fiber composite materials.

Further, the engine and the motor can be connected to the UAV body through sound-absorbing materials.

Further, the engine and the motor can be connected to the UAV body through highly expanded polyethylene sound-absorbing material.

Further, the UAV can also comprises:
The engine controller, which can be used to receive the control command of the control board and output the execution signal to the engine, can be electrically connected to the engine;

The motor controller, which can be used to receive the control command of the control board and output the execution signal to the motor, can be electrically connected to the motor.

Compared with the prior art, the invention has the following beneficial effects:
The UAV provided by the invention arranges the motor rotor, propeller, and engine output shaft to be coaxially connected, and the motor can be used as a generator to do negative work on the engine output shaft to charge the battery, or as an electric motor, that is, to receive the power of the battery, do positive work on the engine output shaft to realize power output. The UAV provided by the invention utilizes the structural arrangement of the UAV, so that the UAV has high energy utilization rate and power redundancy, thus significantly improving flight safety, and ensuring sufficient endurance duration and mileage. Because the UAV is also equipped with damping devices and sound-absorbing materials, it can reduce vibration and noise reduction for the UAV during operation.

### Brief Description of the Figures

Fig. 1 is a side view of a partial structure of a UAV in the embodiment of the invention;
Fig. 2 is the schematic diagram of the exploded structure of Fig. 1;
Fig. 3 is a top view of the damping device of a UAV in the invention;

### Legends in the figures:

10. Propeller; 20. Engine; 21. Engine body; 22. Engine output shaft; 30. Motor; 31. Stator; 32. Rotor; 33. Stator connector; 40. Damping device; 41a. First guide channel; 41b. Second guide channel; 41c. Third guide channel; 41d. Fourth guide channel.

### Detailed Description

In order to make clearer the purpose, technical scheme and advantages of the embodiment of the invention, the technical scheme in the embodiment of the invention is further described below in a clear and complete manner in combination with the figures in the embodiment of the invention. Obviously, the described embodiment is part of the embodiments of the invention, not all of them. Generally, the components of the embodiments of the invention described and shown in the appended figures here can be arranged and designed in various configurations.

The following detailed description of the embodiments of the invention and provided in the attached figures is not intended to limit the scope of the invention, but only represents the selected embodiments of the invention, the scope of which is defined by the appended claims.

It should be noted that similar label numbers and letters indicate similar items in the following figures. Therefore, once an item is defined in an appended figure, it does not need to be further defined and explained in subsequent appended figures.

In the description of the invention, it should be noted that the orientation or position relationship indicated by the terms "upper", "lower", "left", "right", "vertical", "horizontal", "inner", "outer" and so on is based on the orientation or position relationship shown in the appended figures, only for the convenience of describing the invention and simplifying the description, rather than indicating or implying that the device or element referred to must have a specific orientation, or be constructed and operated in a specific direction, so it cannot be understood as a limitation of the invention. In addition, the terms "first", "second", and "third" are used only for descriptive purposes and cannot be understood as indicating or implying relative importance. In the description of the invention, unless otherwise specified, "a plurality of" means two or more.

In the description of the invention, it should be noted that unless otherwise specified and limited, the terms "arrange" and "connect" should be understood in a broad sense. For example, it can be fixedly connected, or detachably connected, or connected in an integrated manner. It can be mechanical connection or electrical connection. For those skilled in the art, the specific meaning of the above terms in the invention can be understood in specific circumstances.

In the description of the invention, unless otherwise clearly specified and limited, the first feature "on" or "under" the second feature may include the direct contact between the first and second features, or the contact between the first and second features that is not direct contact, but through another feature between them. Moreover, the first feature "on", "over", and "above" the second feature may include the first feature directly above and obliquely above the second feature, or only indicates that the horizontal height of the first feature is higher than the second feature. The first feature "under", "below" and "beneath" the second feature, may include the first feature directly below and obliquely below the second feature, or only indicate that the horizontal height of the first feature is smaller than that of the second feature.

The following describes in detail the embodiment of the invention. The example of the embodiment is shown in the appended figures, in which the same or similar label numbers throughout represent the same or similar elements or elements with the same or similar functions. The embodiment described below with reference to the appended figures are exemplary and is only used to explain the invention, but cannot be understood as limitations on the invention.

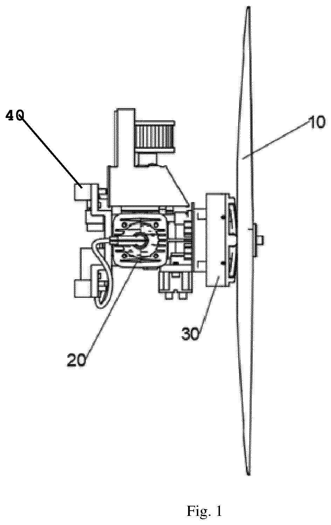

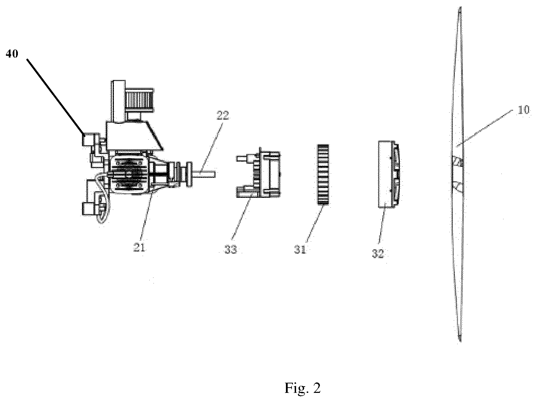

The invention provides a UAV, which is used for surveying and mapping patrol inspection, air logistics and other circumstances; upon specific implementation, as shown in Figs. 1 and 2, the UAV comprises the UAV body and the propeller 10 arranged on the UAV body, as well as the engine 20, motor 30, battery and damping device 40. The UAV body can be made of carbon fiber or other materials to reduce the weight of the whole body. The propeller can be a multi-blade thrust propeller, preferably a three-blade thrust propeller.

Specifically, the engine 20 comprises an engine body 21 and an engine output shaft 22 arranged on the engine body 21. The engine body 21 is installed on the body of the corresponding UAV to realize the stable placement of the engine 20 on the UAV. The engine output shaft 22 is extended from the engine body 21 and connected to the propeller 10 to output the rotating torque to the propeller 10. The motor 30 comprises a stator 31, a rotor 32 and a stator connector 33 for connecting the stator 31 and the rotor 32. In specific implementation, the stator connector 33 is arranged on the engine body 21 to realize the stable placement of the motor 30. The rotor 32 is coaxially arranged on the engine output shaft 22. The propeller 10 is coaxially arranged on the rotor 32; that is, the rotor 32. the propeller 10 and the engine output shaft 22 are coaxially connected. Specifically, the propeller 10 is directly locked on the rotor 32 by fasteners.

The motor 30 in the invention can be used as both a generator and an electric motor. When the motor 30 is used as an electric motor, the rotor 32 of the motor 30 does positive work on the engine output shaft 22 to convert electrical energy into mechanical energy, thus assisting the engine 20 in power output; when the motor 30 is used as a generator, the motor rotor 32 does negative work on the engine output shaft 22 to absorb the output power of the engine 20 and convert mechanical energy into electrical energy, thus realizing the power generation operation. Furthermore, the UAV also comprises a battery, which is connected to the motor 30, so that when the motor 30 is used as an electric motor, the battery discharges to provide electric energy to the motor 30; when the motor 30 is used as a generator, it can receive the electric energy output by the motor 30 for charging. Of course, the battery is not only connected to the motor 30, but also connected to other devices on the UAV that need power supply, so as to ensure the normal operation of the whole UAV.

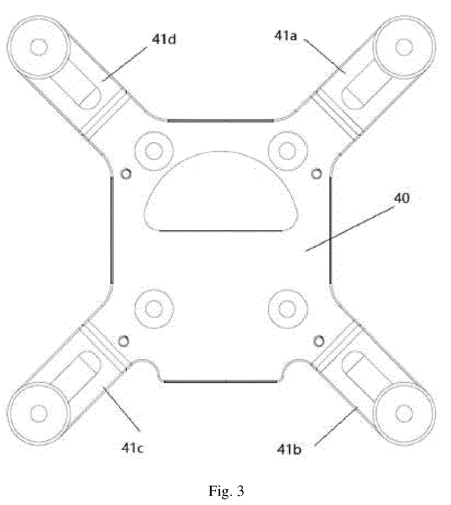

As shown in Fig. 3, the damping device is fixed to the engine 20 body through four through holes located in the center of the damping device body. The damping device is provided with four guide channels, namely, first guide channel, second guide channel, third guide channel and fourth guide channel. Each guide channel is arranged divergently from the axial direction of the center of the damping device body, and the guide channels arranged at adjacent intervals form a preset included angle with each other, which is used to disperse and weaken the vibration generated by the engine during operation. In specific implementation, when the engine is running, due to the arrangement of the guide channels, the vibration force can be gradually dispersed around through the guide channels to weaken the vibration of the engine body in this way. In an example helpful in understanding the invention, each guide channel is arranged along the central axis of the damping device. The preset included angle of the two adjacent guide channels can be 30 degrees to 150 degrees, which is not limited by the invention. Preferably, the preset included angle of two adjacent guide channels can be 90 degrees, and at this time, each adjacent two guide channels are perpendicular to each other. The damping device can be made of aluminum alloy or other metal materials. Among them, the central part of the damping device body is also provided with four through holes, each of which is connected with the engine through bolts or other hinges, so as to realize the fixation between the damping device and the engine. The invention does not make specific restrictions on the specific connection mode. Alternatively, the engine and the motor are also connected with the UAV body through sound-absorbing materials, which are used to further reduce the noise during the operation of the UAV. Preferably, the sound-absorbing materials are highly expanded polyethylene, porous ceramic materials or other materials. which are not further limited by the invention.

In specific implementation, the engine 20 can choose a two-stroke engine. The two-stroke engine is an engine that completes a working cycle between two strokes. It has no valve, which may greatly simplify the structure, reduce its own weight, and can be more conveniently and flexibly installed on mechanical equipment, reducing the weight of the whole mechanical equipment, thereby reducing energy consumption. Alternatively, the motor 30 is a permanent magnet synchronous motor or a permanent magnet asynchronous motor. The motor type of the invention is not further limited. Among them, the permanent magnet synchronous motor matches well with the two-stroke engine. There is no conversion mechanism, so no conversion damage occurs. Permanent magnet synchronous motor and two-stroke engine can work alone, or together without clutch.

In order to facilitate the control of the working state of the engine 20 and motor 30 of the UAV, the UAV also comprises an engine controller and a motor controller; the engine controller is used to receive the control command and output the execution signal to the engine 20, so as to control the operation state of the engine 20. The engine controller is electrically connected with the engine; the motor controller is used to receive the control command and output the execution signal to the motor 30, so as to control the operation state of the motor 30. The motor controller is electrically connected with the motor. Further, the UAV also comprises a control board, which is used to send control commands to the engine controller or motor controller. Of course, the battery can supply power to the control board, engine controller and motor controller to ensure the smooth operation of the UAV. The UAV in the invention arranges the rotor 32 of the motor 30, propeller and engine output shaft 22 to be coaxially connected, and the motor 30 can be used as a generator to charge the battery by doing negative work on the engine output shaft 22, or as an electric motor, that is, to receive the electricity of the battery and do positive work on the engine output shaft 22 to realize power output. The UAV provided by the invention makes full use of the above structural arrangement and determines the specific operation mode according to the different operation conditions of the engine 20 so that it can realize power redundancy while ensuring high energy utilization.

Considering that the invention is applied to the field of UAV, the clutch between the motor and the engine in the UAV is abandoned. The built-in generator unit in conventional UAV generates electricity by driving the motor with a two-stroke engine. The chemical energy of the fuel needs to be converted into mechanical energy, which can be converted into electrical energy through the engine. After the electrical energy finally returns to the battery, it also needs to be converted into mechanical energy before providing power for the UAV. The energy conversion efficiency of the engine itself is only 30%. Through the generator, the conversion efficiency is 84%, and the efficiency of converting electric energy into shaft power is 90%. The above conversion efficiencies are the ideal average values. Due to low conversion efficiency and more conversion times during the period, the energy utilization rate is extremely low.

Therefore, based on the above defects, the invention is applied to the field of UAV with clutch omitted, and connecting the engine, motor, and propeller coaxially, which can offer the UAV high energy utilization and power redundancy, and significantly improve flight safety. On one hand, permanent magnet synchronous motor and two-stroke engine have good matching without conversion mechanism or conversion loss. Permanent magnet synchronous motor and two-stroke engine can operate alone or together, resulting in simple structure without the need for clutch.

Through the coaxial combination with motor and propeller, the engine can run in the high efficiency range, and reduce engine emission and fuel consumption. On the other, the coaxial connection of the engine, motor and propeller overcomes the influence of altitude on the engine output power, greatly improves the assembly output power, increases the flight speed and offers greater power redundancy. On another hand, the coaxial connection of engine, motor and propeller can improve the output power of engine while keeping the level flight power output unchanged. The motor will convert this excess power into electric energy and store it in the battery.

Note that the above is only the better embodiment of the invention and the applied technical principle. Those skilled in the art will understand that the invention is not limited to the specific embodiments described here. Those skilled in the art can make various obvious changes, readjustments, and substitutions without departing from the protection scope of the invention as defined by the appended claims.

## Claims

1. An unmanned aerial vehicle comprising:
a UAV body and a propeller (10) arranged on the UAV body;
an engine (20), comprising an engine body (21) and an engine output shaft (22) arranged on the engine body (21), wherein the engine body (21) is arranged on the UAV body;
a motor (30), comprising a stator (31), a rotor (32) and a stator connector (33) for connecting the stator (31) and the rotor (32), wherein the stator connector (33) is arranged on the engine body (21), and the rotor (32) is coaxially arranged on the engine output shaft (22), and wherein the propeller (10) is coaxially arranged on the rotor (32), and wherein the engine (20), the motor (30), and the propeller (10) are coaxially connected;
a battery, which is connected to the motor (30), and can be discharged to provide electric energy to the motor (30) or receive the electric energy output by the motor (30) for charging; and
a damping device (40), which is connected to the engine (20), and comprises guide channels (41a, 41b, 41c, 41d) for connection with the UAV body, including a first guide channel (41a), a second guide channel (41b), a third guide channel (41c) and a forth guide channel (41d);
wherein each guide channel (41a; 41b; 41c; 41d) is arranged divergently from a central axis of the damping device (40),
whereby the adjacent guide channels (41a, 41b, 41c, 41d) form a preset included angle with each other, and are used to disperse and weaken a vibration generated by the engine (20) during operation.

2. The UAV according to claim 1, which is **characterized in that** the engine (20) is a two-stroke engine.

3. The UAV according to claim 1 or 2, which is **characterized in that** the motor (30) is a permanent magnet synchronous motor.

4. The UAV according to claim 1, which is **characterized in that** the preset included angle formed between two adjacent guide channels (41a, 41b, 41c, 41d) is of 30 degrees to 150 degrees.

5. The UAV according to claim 1, which is **characterized in that** the propeller (10) is a multi-blade thrust propeller.

6. The UAV according to any one of the preceding claims, which is **characterized in that** the UAV body is composed of carbon fiber composite materials.

7. The UAV according to claim 1, which is **characterized in that** the engine (20) and the motor (30) are connected to the UAV body through sound-absorbing materials.

8. The UAV according to claim 7, which is **characterized in that** the engine (20) and the motor (30) are connected to the UAV body through highly expanded polyethylene sound-absorbing material.

9. The UAV according to claim 1, which is **characterized in that** the UAV further comprises:
an engine controller, which is used to receive a control command of a control board and output an execution signal to the engine (20), is electrically connected to the engine (20); and
a motor controller, which is used to receive the control command of the control board and output the execution signal to the motor (30), is electrically connected to the motor (30).

## Patentansprüche

1. Unbemanntes Luftfahrzeug umfassend:
einen UAV-Körper und einen Propeller (10), der an dem UAV-Körper angeordnet ist;
eine Kraftmaschine (20), die einen Kraftmaschinenkörper (21) und eine Kraftmaschinen-Ausgangswelle (22), die an dem Kraftmaschinenkörper (21) angeordnet ist, umfasst, wobei der Kraftmaschinenkörper (21) an dem UAV-Körper angeordnet ist;
einen Motor (30), der einen Stator (31), einen Rotor (32) und einen Statorverbinder (33) zum Verbinden des Stators (31) und des Rotors (32) umfasst, wobei der Statorverbinder (33) an dem Kraftmaschinenkörper (21) angeordnet ist und der Rotor (32) koaxial an der Kraftmaschinen-Ausgangswelle (22) angeordnet ist und wobei der Propeller (10) koaxial an dem Rotor (32) angeordnet ist und wobei die Kraftmaschine (20), der Motor (30) und der Propeller (10) koaxial verbunden sind;
eine Batterie, die mit dem Motor (30) verbunden ist und entladen werden kann, um für den Motor (30) elektrische Energie bereitzustellen, oder zum Aufladen elektrische Energie empfangen kann, die durch den Motor (30) ausgegeben wird; und
eine Dämpfungsvorrichtung (40), die mit der Kraftmaschine (20) verbunden ist und Leitungskanäle (41a, 41b, 41c, 41d) zur Verbindung mit dem UAV-Körper umfasst, die einen ersten Leitungskanal (41a), einen zweiten Leitungskanal (41b), einen dritten Leitungskanal (41c) und einen vierten Leitungskanal (41d) enthalten;
wobei jeder Leitungskanal (41a, 41b, 41c, 41d) ausgehend von einer Mittelachse der Dämpfungsvorrichtung (40) radialstrahlig angeordnet ist,
wodurch die benachbarten Leitungskanäle (41a, 41b, 41c, 41d) einen vorgegebenen eingeschlossenen Winkel miteinander bilden und verwendet werden, um eine Schwingung, die im Betrieb durch die Kraftmaschine (20) erzeugt wird, zu verteilen und abzuschwächen.

2. UAV nach Anspruch 1, **dadurch gekennzeichnet, dass** die Kraftmaschine (20) eine Zweitakt-Kraftmaschine ist.

3. UAV nach Anspruch 1 oder 2, **dadurch gekennzeichnet, dass** der Motor (30) ein Permanentmagnet-Synchronmotor ist.

4. UAV nach Anspruch 1, **dadurch gekennzeichnet, dass** der vorgegebene eingeschlossene Winkel, der zwischen zwei benachbarten Leitungskanälen (41a, 41b, 41c, 41d) gebildet ist, im Bereich von 30 Grad bis 150 Grad liegt.

5. UAV nach Anspruch 1, **dadurch gekennzeichnet, dass** der Propeller (10) ein mehrblättriger Schubpropeller ist.

6. UAV nach einem der vorhergehenden Ansprüche, **dadurch gekennzeichnet, dass** der UAV-Körper aus Kohlefaser-Verbundmaterialen besteht.

7. UAV nach Anspruch 1, **dadurch gekennzeichnet, dass** die Kraftmaschine (20) und der Motor (30) durch schalldämpfende Materialien mit dem UAV-Körper verbunden sind.

8. UAV nach Anspruch 7, **dadurch gekennzeichnet, dass** die Kraftmaschine (20) und der Motor (30) durch ein schalldämpfendes Material aus hochgradig expandiertem Polyethylen mit dem UAV-Körper verbunden sind.

9. UAV nach Anspruch 1, **dadurch gekennzeichnet, dass** das UAV ferner umfasst:
eine Kraftmaschinen-Steuereinheit, die verwendet wird, um einen Steuerbefehl von einer Steuerleiterplatte zu empfangen und ein Ausführungssignal an die Kraftmaschine (20) auszugeben, und die mit der Kraftmaschine (20) elektrisch verbunden ist; und
eine Motorsteuereinheit, die verwendet wird, um den Steuerbefehl der Steuerleiterplatte zu empfangen und das Ausführungssignal an den Motor (30) auszugeben, und die mit dem Motor (30) elektrisch verbunden ist.

## Revendications

1. Véhicule aérien sans équipage, UAV, comprenant :
un corps d'UAV et une hélice (10) agencée sur le corps d'UAV ;
un moteur (20), comprenant un corps de moteur (21) et un arbre de sortie de moteur (22) agencé sur le corps de moteur (21), dans lequel le corps de moteur (21) est agencé sur le corps d'UAV ;
une motrice (30), comprenant un stator (31), un rotor (32) et un connecteur de stator (33) destiné à connecter le stator (31) et le rotor (32), dans lequel le connecteur de stator (33) est agencé sur le corps de moteur (21), et le rotor (32) est agencé de manière coaxiale sur l'arbre de sortie de moteur (22), et dans lequel l'hélice (10) est agencée de manière coaxiale sur le rotor (32), et dans lequel le moteur (20), la motrice (30), et l'hélice (10) sont connectés de manière coaxiale ;
une batterie, qui est connectée à la motrice (30), et qui peut être déchargée pour fournir une énergie électrique à la motrice (30) ou recevoir l'énergie électrique sortie par la motrice (30) pour un chargement ; et
un dispositif d'amortisseur (40), qui est connecté au moteur (20) et qui comprend des canaux de guidage (41a, 41b, 41c, 41d) pour une connexion au corps d'UAV, incluant un premier canal de guidage (41a), un deuxième canal de guidage (41b), un troisième canal de guidage (41c) et un quatrième canal de guidage (41d) ;
dans lequel chaque canal de guidage (41a ; 41b ; 41c; 41d) est agencé de manière divergente par rapport à un axe central du dispositif d'amortisseur (40),
moyennant quoi les canaux de guidage adjacents (41a, 41b, 41c, 41d) forment un angle inclus prédéfini entre eux, et sont utilisés pour disperser et atténuer une vibration générée par le moteur (20) en cours de fonctionnement.

2. UAV selon la revendication 1, qui est **caractérisé en ce que** le moteur (20) est un moteur à deux temps.

3. UAV selon la revendication 1 ou 2, qui est **caractérisé en ce que** la motrice (30) est un moteur synchrone à aimants permanents.

4. UAV selon la revendication 1, qui est **caractérisé en ce que** l'angle inclus prédéfini formé entre deux canaux de guidage adjacents (41a, 41b, 41c, 41d) est de 30 degrés à 150 degrés.

5. UAV selon la revendication 1, qui est **caractérisé en ce que** l'hélice (10) est une hélice propulsive à plusieurs pales.

6. UAV selon l'une quelconque des revendications précédentes, qui est **caractérisé en ce que** le corps d'UAV est composé de matériaux composites en fibres de carbone.

7. UAV selon la revendication 1, qui est **caractérisé en ce que** le moteur (20) et la motrice (30) sont connectés au corps d'UAV par l'intermédiaire de matériaux d'absorption sonore.

8. UAV selon la revendication 7, qui est **caractérisé en ce que** le moteur (20) et la motrice (30) sont connectés au corps d'UAV par l'intermédiaire d'un matériau d'absorption sonore en polyéthylène fortement expansé.

9. UAV selon la revendication 1, qui est **caractérisé en ce que** l'UAV comprend en outre :
un contrôleur de moteur, qui est utilisé pour recevoir un ordre de commande d'un panneau de commande et pour sortir un signal d'exécution vers le moteur (20), qui est connecté électriquement au moteur (20) ; et
un contrôleur de motrice, qui est utilisé pour recevoir l'ordre de commande du panneau de commande et pour sortir le signal d'exécution vers la motrice (30), qui est connecté électriquement à la motrice (30).
